# EUROPEAN PATENT APPLICATION

(11) **EP 1 110 824 A2**
(43) Date of publication of application: **27.06.2001**
(21) Application number: 00500250.6
(22) Date of filing: 23.11.2000
(51) Int. Cl.: B60R 21/20

(54) **Arrangement for positioning and fastening an airbag module cover**

(30) Priority: 23.11.1999 ES 9902968 U
(71) Applicant: Dalphi Metal Espana, S.A., 28006 Madrid (ES)
(72) Inventor: Gras Tous, Luis, 28006 Madrid (ES)
(74) Representative: Plaza Fernandez-Villa, Luis

(57) **Abstract**

Improved arrangement for positioning an airbag module cover which consists of two cylindrical stubs (1), located on the airbag module cover, which are inserted into three cylindrical housings (2), located at the horn plate, having six pawls (3), opposed two by two, inserting into six pawls (4), located two by two at the horn plate.

## Description

### BACKGROUND OF THE INVENTION

The present specification refers to an application for a Model of Utility related to an improved arrangement for positioning an airbag module cover, the purpose of which is to attain and hold a fixed position, independently of the airbag module assembly in question, acting at the same time as a fastening of the cover.

### FIELD OF THE INVENTION

The present invention will find application in the industry dedicated to the manufacture of motorcars, more specifically to the industry dedicated to the manufacture of steering wheels and safety accessories for same.

### PRIOR ART

The applicant is not aware of the use and existence at present of an arrangement, mechanism or appropiate element providing a selfpositioning of a airbag module cover in relation to the carrying steering wheel, having, at the same time the faculty of fastening the same with regard to the horn plate, remaining consequently duly positioned in relation to the steering wheel.

### SUMMARY OF THE INVENTION

The improved arrangement for positioning an airbag module cover as proposed by the invention, presents, per se, a plurality of advantages in relation to the elements of similar application, so attaining the aim required from the invention, in a simplified way.

In a most specific way, the improved arrangement for positioning an airbag module cover, is constituted starting from the fact of having, at the airbag module, cover, three cylindrical stubs intended for being inserted into three housings having an also cylindrical configuration, located at the horn plate, intended for performing the fastening or securing the position the airbag module cover, having six pegs, opposed two by two, the function of which is to secure the positioning and fastening by an appropiate fitting in six pawls emerging from the horn plate.

### DESCRIPTION OF THE DRAWINGS

In order to complement this description and aid to a better understanding of the characteristics of the invention, the appending set of drawings, which is a part of this specification, shows, by way of illustrative and non-limitative example, the following:

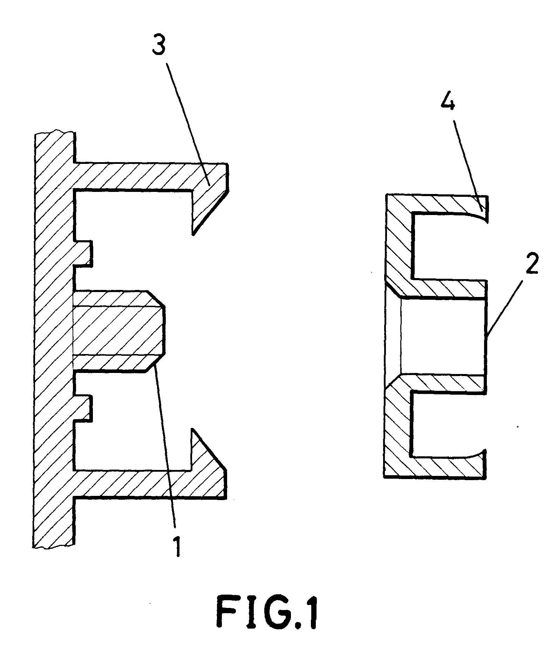

Figure 1 shows, in a simplified view, the object of the invention, referring to an improved arrangement for positioning an airbag module cover.

### DESCRIPTION OF THE PREFERRED EMBODIMENT OF THE INVENTION

In this figure, it can be seen that the improved arrangement for positioning an airbag module cover, is constituted starting from the fact of having, on the airbag module cover, three cylindrical stubs (1) intended for being inserted into three cylindrical housings (2), emerging from the horn plate, so securing the airbag module cover position with the horn plate, presenting, at the same time, six pegs (3), opposed two by two, incorporated in order to secure the position and fastening by means of an appropiate fitting in six pawls, incorporated two by two (4), emerging from the horn plate.

It is not considered necessary to extend this description for any expert in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. Improved arrangement for positioning an airbag module cover, characterized in the fact that it is constituted starting from having three cylindrical stubs (1) on the airbag module cover, inserted into three cylindrical housings (2), located at the horn plate, presenting also six pegs (3), opposed two by two, inserted into six pawls located two by two (4), at the horn plate.
